**Europäisches Patentamt**

**European Patent Office**

**Office européen des brevets**

(19)

(11) Publication number : **0 409 430 B1**

(12) # EUROPEAN PATENT SPECIFICATION

(45) Date of publication of patent specification :
27.10.93 Bulletin 93/43

(51) Int. Cl.⁵ : **A23L 3/365**

(21) Application number : **90307022.5**

(22) Date of filing : **27.06.90**

(54) **Process for thawing foodstuffs.**

(30) Priority : **30.06.89 JP 168833/89**

(43) Date of publication of application :
**23.01.91 Bulletin 91/04**

(45) Publication of the grant of the patent :
**27.10.93 Bulletin 93/43**

(84) Designated Contracting States :
**CH DE DK FR GB IT LI**

(56) References cited :
**FR-A- 1 032 616**
**FR-A- 1 107 852**

(56) References cited :
**US-A- 2 807 551**
**US-A- 2 894 846**
**US-A- 2 938 804**
**US-A- 3 573 067**

(73) Proprietor : **Ohtsuki, Tatsukiyo**
**9-25, Saiwaicho**
**Okayama-shi (JP)**

(72) Inventor : **Ohtsuki, Tatsukiyo**
**9-25, Saiwaicho**
**Okayama-shi (JP)**

(74) Representative : **Baillie, Iain Cameron et al**
**c/o Ladas & Parry, Altheimer Eck 2**
**D-80331 München (DE)**

## Description

The present invention relates to a process for thawing foodstuffs. More particularly, the present invention relates to a process for applying negative electrons to foodstuffs by the high voltage induced electrostatic method to thaw it rapidly at a low temperature in the range of -3° to 3°C.

When frozen food is thawed, it is desirable to thaw it carefully so that the values of its materials is maintained and not only its color or taste but also its appearance will now be impaired.

Conventional thawing methods include thawing methods such as exposing frozen food to warmed air and flowing water or a high speed thawing with an electric heating source or high-frequency wave. These methods, however, have disadvantages that the frozen food is often heated to an unexpected high temperature so that the freshness of the frozen food is lost to cause the discoloration of the food or the propagation of various germs.

As mentioned above, conventional methods inevitably raises the temperature of the frozen food and lowers its freshness thus causing the deterioration of its value as food. Therefore, it is earnestly desired to find a method for rapidly thawing frozen food without raising the temperature of frozen food.

Some degree of thawing is achieved in cited specifications US-A-3573067, US-A-2807551 and FR-A-1107852. However, US-A-3573067 discloses a method of sterilization of pre-cooked meat and gravy products in a sealed container by apply high energy ionizing radiation, that is, at radio frequency. US-A-2807551 discloses a process of sterilizing food substances by ionizing penetrating radiation (radio frequency) comprising storing the substances in a hermetically sealed container under refrigeration for 72-96 hours. In addition, French Patent FR-A-1107852 discloses a process for sterilizing food products or pharmaceuticals at a temperature of -20°C to -100°C by subjecting the food product to a high velocity of electrons (3,000,000 - 6,000,000 volts) during $10^{-4}$ to $10^{-6}$ seconds.

Whilst all three prior art references disclose some degree of thawing because of the heat energy applied to them all of the cited references utilize radio frequency energy and high voltage to generate ions and electrons, thereby sterilizing the food products with the generated heat energy. Heat generation cannot be avoided, and a hermetically sealed container under oxygen free conditions has to be used so that the food products for sterilization may not be subject to oxidation.

Therefore, it is desirable to provide rapid thawing of food products in which the above mentioned disadvantages are substantially eliminated. This can be achieved by the present invention which is a process for thawing frozen food characterized in disposing the food to be thawed in the range of -3°C to 3°C on a conductive first electrode, applying a supply voltage to the primary side of a high voltage transducer to generate an electrical potential in a range 5,000 to 20,000 volts across output terminals of a secondary side of the said transducer, applying the electrical potential to the conductive electrode which is connected to one output terminal of the secondary side of the transducer, and applying current to said primary side in the range of 0.02 to 0.3 amperes per square meter of the said first electrode.

Thereby, there is provided a process in including electrostatic induction which the complicated conditions such as oxydation and hermetical sealing do not need to be considered. Moreover, the process according to the present invention is highly useful in the related food industries because of its simplicity, ease of use and cheapness of installation.

The present invention is a process for overcoming the aforementioned problem and thawing frozen food with the inside of a thawing chamber being completely insulated from the outside of it, and a shelf made of stainless steel plate (conductor) is provided therein so that a food to be thawed is placed on the shelf and thawed with use of a negative electron generator by the electrostatic induction method.

As mentioned above, it has become possible to thaw rapidly and uniformly the whole of the food to be thawed at a temperature in the range of -3°C to 3° without raising its temperature by applying negative electrons generated by electrostatic induction to the inside of a thawing chamber according to the process of the present invention. Moreover, the process according to the present invention is superior in sterilization effect and can keep food cool without the discoloration or fading and with little dripping.

The method for generating negative electrons by electrostatic induction according to the present invention is a method which is conducted, for example, by using a high voltage transducer, insulating an electrode at the secondary high voltage side, connecting another electrode to a shelf made of an electroconductive metal such as an iron or stainless steel plate and applying negative electron by electrostatic induction. In this connection, it is necessary to insulate completely all of the accessories.

The negative electron generating condition according to the present invention can be controlled by the primary current. However, if the primary current is of a value at most 0.02 $A/m^2$ of the area of the electrode, the effect of the present invention is not conspicuous. Also, if the primary current is of a value of 0.3 A or more, the effect is not increased so much.

Negative electrons shall be generated under the aforementioned condition according to the electrostatic induction of the present invention.

An embodiment of the present invention will now be described by way of example with reference to the accompanying drawing which is a sectional view of a thawing apparatus used in the present invention.

More particularly, the thawing apparatus comprises a negative electron generator 1, a freezer 2 and a conductive electron 3. The latter is located against an insulating part 4, and shelving to support food 5 thereon divides the apparatus into a number of thawing chambers 6.

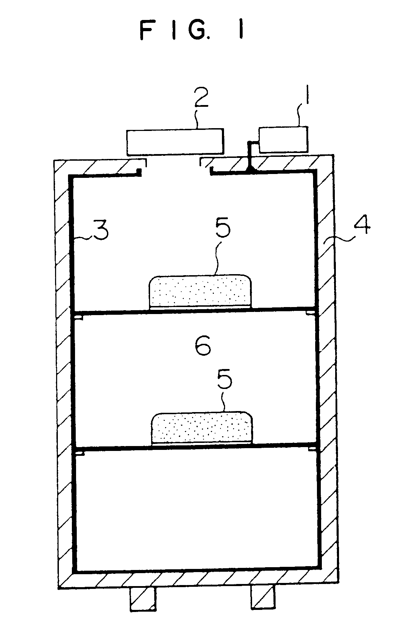

As illustrated in Fig. 1, the inside of a thawing chamber for use in a process according to the present invention is completely insulated from the outside and an electrode at the primary side of the negative electron generator 1 with use of electrostatic induction is connected to the inside 3 of the thawing chamber 6 so that negative electrons can be applied to the inside. In this connection, the inside of the thawing chamber is connected to a shelf by a fastening and thus the two parts are in the state of communication. The temperature within the chamber 6 is set in the range -3°C to 3°C.

A food to be thawed is placed on the shelf and thawing is started by turning on the switch of a negative electron generator 1.

The negative electron generating condition in the present invention is of a current value in the primary side of 100 V of a high voltage transducer in the range of 0.02 A - 0.3 A per 1 m² of the area of the electrode with the secondary voltage for satisfying the primary voltage being required to be in the design range of 5000 V - 20,000 V.

Thawing tests were conducted within the apparatus used in the process according to the present invention provided in a refrigerator or at an ambient temperature with reference to tuna fish meat, beef and an egg.

(1) Test of tuna meat piece

Thawing was carried out with the apparatus for the process according to the present invention (condition: 0.009 A, 15,000 V) and with a refrigerator as a control.

Table 1-1

| Thaw-ing method | Thawing tempe-rature (°C) | Thaw-ing (hr) | Germs (number/cc) | | Drip amount (g) | Weight reduc-tion (%) |
|---|---|---|---|---|---|---|
| | | | General germs | E. coli | | |
| 1* | −3 | 10 | $1.8 \times 10^3$ | negative | 0 | 0 |
| 1* | −1 ~ 3 | 8 | $1.9 \times 10^4$ | negative | 0 | 0 |
| 2** | −3 | 45 | $3.0 \times 10^6$ | $4.0 \times 10^2$ | 25 | 2.5 |
| 2** | −1 ~ 3 | 32 | $3.1 \times 10^6$ | $4.1 \times 10^2$ | 30 | 3.0 |

(Weight of food to be thawed: 1,000 g)

*:   Apparatus for the process according to the present invention,

**:   Refrigerator.

Table 1-2

| Thaw- ing method | Thawing tempe- rature (°C) | Thaw- ing (hr) | Germs (number/cc) | | Drip amount (g) | Weight reduc- tion (%) |
|---|---|---|---|---|---|---|
| | | | General germs | E. coli | | |
| 1* | -3 | 15 | $1.9 \times 10^3$ | negative | 0 | 0 |
| 1* | -1 ~ 3 | 12 | $1.8 \times 10^4$ | negative | 0 | 0 |
| 2** | -3 | 90 | $3.0 \times 10^6$ | $3.9 \times 10^2$ | 75 | 1.5 |
| 2** | -1 ~ 3 | 72 | $3.3 \times 10^6$ | $4.1 \times 10^2$ | 100 | 2.0 |

(Weight of food to be thawed: 5.000 g)

*: Apparatus for the process according to the present invention,

**: Refrigerator.

The result of the thawing test of tuna meat pieces is shown in Table 1-1- and 1-2. That is, the tuna meat piece could be thawed in a time of 1/4 - 1/6 in the apparatus as compared with that in the refrigerator at the same temperature, and the general germs could be suppressed to the level of 1/180 - 1/1600 in the apparatus as compared with those in the refrigerator. Moreover, E. coli was not detected in the test with use of the apparatus.

The amount of drip, that is, the weight reduction rate was 0 in the apparatus, while 1.5 - 3% in the refrigerator.

(2) Test of beef piece

Test was conducted with the apparatus for the process according to the present invention and the refrigerator.

Table 2-1

| Thaw-ing method | Thawing tempe-rature (°C) | Thaw-ing (hr) | Germs (number/cc) | | Drip amount (g) | Weight reduc-tion (%) |
|---|---|---|---|---|---|---|
| | | | General germs | E. coli | | |
| 1* | -3 | 10 | $4.0 \times 10^2$ | negative | 0 | 0 |
| 1* | -1 ~ 3 | 8 | $7.5 \times 10^2$ | negative | 0 | 0 |
| 2** | -3 | 30 | $1.3 \times 10^4$ | negative | 20 | 2.0 |
| 2** | -1 ~ 3 | 24 | $1.5 \times 10^4$ | negative | 20 | 2.0 |

(Weight of food to be thawed: 1.000 g)

Table 2-2

| Thaw-ing method | Thawing tempe-rature (°C) | Thaw-ing (hr) | Germs (number/cc) | | Drip amount (g) | Weight reduc-tion (%) |
|---|---|---|---|---|---|---|
| | | | General germs | E. coli | | |
| 1* | -3 | 15 | $5.0 \times 10^2$ | negative | 0 | 0 |
| 1* | -1 ~ 3 | 12 | $8.0 \times 10^2$ | negative | 0 | 0 |
| 2** | -3 | 60 | $1.5 \times 10^4$ | negative | 50 | 1.0 |
| 2** | -1 ~ 3 | 48 | $1.7 \times 10^4$ | negative | 75 | 1.5 |

(Weight of food to be thawed: 5.000 g)

*:       Apparatus for the process according to the present invention,

**:    Refrigerator.

The result of the thawing test of beef pieces is shown in Table 1-1 and 1-2. That is, the tuna meat piece could be thawed in a time of 1/4 - 1/6 in the apparatus as compared with that in the refrigerator at the same temperature, and the general germs could be suppressed to the level of 1/20 - 1/30 in the apparatus as compared with those in the refrigerator. Moreover, the amount of drip, that is, the weight reduction rate was 0 in the apparatus, while 1 - 2% in the refrigerator.

6

(3) Test of yolk

The test was conducted with the apparatus for the process according to the present invention and the re-frigerator.

Table 3

| Thawing method | Thawing tempe-rature (°C) | Thawing time (hr) | Germs (number/cc) | |
|---|---|---|---|---|
| | | | General germs | E. coli |
| 1* | −3 | 12 | 10 or less | negative |
| 1* | −1 ~ 3 | 10 | 10 or less | negative |
| 2** | 5 | 24 | 1.7x10 | negative |
| 3*** | 5 ~ 10 | 10 | 1.4x10 | negative |

(Weight of food to be thawed: 1,800 g)

\*: Apparatus for the process according to the present invention,

\*\*: Refrigerator,

\*\*\*: Ambient temperature.

(4) Test of the weight of eggs

The test was conducted with the apparatus for the process according to the present invention and the re-frigerator.

Table 4

| Thawing method | Thawing tempe-rature (°C) | Thawing time (hr) | Germs (number/cc) | |
|---|---|---|---|---|
| | | | General germs | E. coli |
| 1* | −3 | 35 | 10 or less | negative |
| 1* | −1 ~ 3 | 30 | 3.5x10 | negative |
| 2** | 5 | 60 | $6.7 \times 10^2$ | negative |
| 3*** | 5 ~ 12 | 30 | $8.7 \times 10^2$ | negative |

(Weight of food to be thawed: 1,800 g)

7

\*:   Apparaus for the process according to the present invention,

\*\*:   Refrigerator,

\*\*\*:   Ambient temperature.

It was found that the present invention with use of the generation of negative electron by electrostatic induction as the thawing means can smoothly conduct heat exchange between the inside and the outside of a frozen food without raising temperature of the food.

Therefore, the thawing time could be shortened to 1/4 to 1/3 at the same temperature condition.

Moreover, frozen food could be thawed without the raise of the temperature and thus dripping from the food was not observed in the case of the apparatus of the present invention.

It was also found that the apparatus for the nrocess of the present invention is excellent in sterilizing effect, the proliferation of germs can be suppressed and at the same time the thawed food can be matured, so that the thawed food is preserved in the fresh state for a long period.

## Claims

1. A process for thawing frozen food, characterised in disposing the food to be thawed in the range of -3°C to 3°C on a conductive first electrode, applying a supply voltage to the primary side of a high voltage transducer to generate an electrical potential in a range 5,000 to 20,000 volts across output terminals of a secondary side of the said transducer, applying the electrical potential to the conductive electrode which is connected to one output terminal of the secondary side of the transducer, and applying current to said primary side in the range of 0.02 to 0.3 amperes per square meter of the said first electrode.

2. A process as claimed in claim 1 or 2, characterised in applying primary current in the range of 0.02 - 0.3 A per 1 m² of the conductive first electrode from a high voltage electrostatic transducer of 100 V.

## Patentansprüche

1. Verfahren zum Auftauen von gefrorenen Nahrungsmitteln, dadurch gekennzeichnet, daß das aufzutauende Nahrungsmittel bei einer Temperatur im Bereich von -3°C bis 3°C auf einer leitenden ersten Elektrode angeordnet wird, auf die erste Seite eines Hochspannungswandlers eine Versorgungsspannung gelegt wird, um ein elektrisches Potential im Bereich von 5.000 bis 20.000 Volt an den Ausgangsanschlüssen einer zweiten Seite des Wandlers zu erzeugen, das elektrische Potential an diejenige leitende Elektrode gelegt wird, die mit einem Ausgangsanschluß auf der zweiten Seite des Wandlers verbunden ist, und daß Strom an die erste Seite mit einer Stromstärke im Bereich von 0,02 bis 0,3 Ampère pro Quadratmeter der ersten Elektrode angelegt wird.

2. Verfahren nach Anspruch 1 oder 2, dadurch gekennzeichnet, daß der erste Strom mit einer Stromstärke im Bereich von 0,02 bis 0,3 Ampère pro Quadratmeter der leitenden ersten Elektrode von einem elektrostatischen Hochspannungswandler von 100 V angelegt wird.

## Revendications

1. Procédé pour la décongélation d'aliments congelés, caractérisé en ce que l'on dispose les aliments à décongeler dans la plage de -3°C jusqu'à 3°C sur une première électrode conductrice, on applique une tension d'alimentation au côté primaire d'un transducteur haute tension pour produire un potentiel électrique dans la plage de 5000 à 20 000 volts aux bornes de sortie d'un côté secondaire du transducteur, on applique le potentiel électrique à l'électrode conductrice qui est raccordée à une borne de sortie du côté secondaire du transducteur et on applique le courant au côte primaire dans la plage de 0,02 jusqu'à 0,3 ampère par mètre carré de la première électrode.

2. Procédé selon la revendication 1, caractérisé en ce que l'on applique un courant primaire dans la plage de 0,02 - 0,3 A par 1 m² de la première électrode conductrice à partir d'un transducteur électrostatique haute tension de 100 V.

# F I G. I